# EUROPEAN PATENT SPECIFICATION

(11) **EP 4 050 633 B1**
(45) Date of publication and mention of the grant of the patent: **02.12.2026**
(21) Application number: 20880195.1
(22) Date of filing: 22.10.2020
(51) Int. Cl.: H01G 2/02, H01G 11/82, H01G 11/08, H01G 11/10, H01G 11/76, H01M 50/298, H01M 10/48, H01M 50/209, H01M 50/30, H01M 50/342, H01M 50/507, H01G 11/18, H01G 11/12, H01G 11/14, H01G 11/78, H01M 50/569

(54) **ELECTRICAL STORAGE DEVICE**
ELEKTRISCHE SPEICHERVORRICHTUNG
DISPOSITIF DE STOCKAGE ÉLECTRIQUE

(30) Priority: 23.10.2019 JP 2019192411
(43) Date of publication of application: 31.08.2022
(73) Proprietor: GS Yuasa International Ltd., Kisshoin, Minami-ku, Kyoto-shi, Kyoto 601-8520 (JP)
(72) Inventor: HIDAKA, Tsuyoshi, Ritto-shi, Shiga 520-3021 (JP); KAWAUCHI, Tomohiro, Ritto-shi, Shiga 520-3021 (JP); KUSUNOKI, Toshiki, Ritto-shi, Shiga 520-3021 (JP)
(74) Representative: Grünecker Patent- und Rechtsanwälte PartG mbB
(86) International application number: PCT/JP2020/039730
(87) International publication number: WO 2021/079937

(56) References cited:
- EP-A1- 2 814 087
- EP-A1- 3 113 249
- EP-A1- 3 321 994
- WO-A1-2012/042913
- WO-A1-2017/006763
- JP-A- 2017 059 377
- JP-A- 2017 216 114
- US-A1- 2016 036 088
- US-A1- 2016 197 330

## Description

### TECHNICAL FIELD

The present invention relates to an energy storage apparatus.

### BACKGROUND ART

Conventionally, in an energy storage apparatus including a plurality of energy storage devices, busbars (busbars 16) for connecting electrode terminals provided in the respective energy storage devices are held by busbar holding members (busbar holders 6) (cf. Patent Document 1). The busbar holding member on one side in a cell-width direction may be coupled with the busbar holding member on the other side by a plurality of couplings (ribs 39).

### PRIOR ART DOCUMENT

EP 3 113 249 A1 discloses an energy storage apparatus which includes a first energy storage device having a first terminal which is either a positive electrode terminal or a negative electrode terminal. The energy storage apparatus further includes a terminal neighboring member, which is disposed adjacently to the first terminal of the first energy storage device.

JP 2017 059377 A discloses a power storage device including a power storage element and an external connection terminal. The external connection terminal includes a member disposed on a terminal side. The member is disposed on a positive electrode terminal side of the power storage element.

EP 3 321 994 A1 discloses a battery module having a structure with which dimensional errors of assembly components can be absorbed for locking and assembling.

WO 2012/042913 A1 discloses a battery block that is configured of a plurality of battery cells each having a gas vent valve.

### PATENT DOCUMENT

Patent Document 1: International Publication No. 2017/006763

### SUMMARY OF THE INVENTION

The invention is defined by independent claim 1. Further embodiments are defined by the dependent claims.

### PROBLEMS TO BE SOLVED BY THE INVENTION

The space in the energy storage apparatus is consumed due to the presence of the plurality of couplings. A gas path may be provided on a gas release valve of each energy storage device. In this case, the plurality of couplings are exposed to the high-temperature gas passing through the path and may melt or burn.

An object of the present invention is to reduce an influence of gas on an inside of an energy storage apparatus while enhancing space efficiency in the energy storage apparatus.

### MEANS FOR SOLVING THE PROBLEMS

An energy storage apparatus according to one aspect of the present invention includes: a plurality of energy storage devices that include gas release valves, respectively, and are arranged in orientations in which the gas release valves face an identical direction; a plurality of busbars electrically connected to the plurality of energy storage devices; and a busbar holding member that is disposed on the plurality of energy storage devices and holds the plurality of busbars. The energy storage device includes a body portion having each of the gas release valves on an upper surface of the body portion, and a pair of electrode terminals disposed on the upper surface of the body portion. The busbar holding member includes a first holder disposed on the plurality of energy storage devices and on one side of the gas release valve, a second holder disposed on the plurality of energy storage devices and on the other side of the gas release valve, and a coupling that is disposed between at least a pair of adjacent energy storage devices among the plurality of energy storage devices and couples the first holder with the second holder. An upper end surface of a part of the coupling is disposed below the upper surface of the body portion or flush with the upper surface of the body portion.

### ADVANTAGES OF THE INVENTION

According to the energy storage apparatus of the present invention, it is possible to reduce the influence of the gas on the inside of the energy storage apparatus while enhancing the space efficiency in the energy storage apparatus.

### BRIEF DESCRIPTION OF THE DRAWINGS

Fig. 1 is a perspective view illustrating an appearance of an energy storage apparatus according to an embodiment.
Fig. 2 is an exploded perspective view illustrating each component when an energy storage unit according to the embodiment is disassembled.
Fig. 3 is an exploded perspective view illustrating a schematic configuration of an exhaust portion and a busbar frame according to the embodiment.
Fig. 4 is a top view illustrating a schematic configuration of the busbar frame according to the embodiment.
Fig. 5 is an explanatory view illustrating a positional relationship between a coupling and an energy storage device according to the embodiment.
Fig. 6 is a cross-sectional view illustrating a positional relationship between the coupling and the exhaust portion according to the embodiment.
Fig. 7 is a top view illustrating a schematic configuration of a guide according to the embodiment.
Fig. 8 is a perspective view illustrating a schematic configuration of a detection line holder according to the embodiment.
Fig. 9 is a cross-sectional view illustrating a schematic configuration of the detection line holder according to the embodiment.
Fig. 10 is a cross-sectional view illustrating a schematic configuration of a detection line holder according to Modification 1.
Fig. 11 is a perspective view illustrating a busbar frame and a vicinity of a guide according to Modification 2.

### MODE FOR CARRYING OUT THE INVENTION

The space in the energy storage apparatus is actually consumed due to the presence of the plurality of couplings. A gas path may be provided on a gas release valve of each energy storage device. In this case, the plurality of couplings are exposed to the high-temperature gas passing through the path and may melt or burn.

An object of the present invention is to reduce an influence of gas on an inside of an energy storage apparatus while enhancing space efficiency in the energy storage apparatus.

An energy storage apparatus according to one aspect of the present invention includes: a plurality of energy storage devices that include gas release valves, respectively, and are arranged in orientations in which the gas release valves face an identical direction; a plurality of busbars electrically connected to the plurality of energy storage devices; and a busbar holding member that is disposed on the plurality of energy storage devices and holds the plurality of busbars. The energy storage device includes a body portion having each of the gas release valves on an upper surface of the body portion, and a pair of electrode terminals disposed on the upper surface of the body portion. The busbar holding member includes a first holder disposed on the plurality of energy storage devices and on one side of the gas release valve, a second holder disposed on the plurality of energy storage devices and on the other side of the gas release valve, and a coupling that is disposed between at least a pair of adjacent energy storage devices among the plurality of energy storage devices and couples the first holder with the second holder. An upper end surface of a part of the coupling is disposed below the upper surface of the body portion or flush with the upper surface of the body portion.

With this configuration, the coupling is disposed between at least a pair of adjacent energy storage devices, and hence, the gas release valve of each energy storage device is brought into an exposed state. It is thus possible to reduce the coupling from being affected by the gas released from the gas release valve. Since the upper end surface of a part of the coupling is disposed below or flush with the upper surface of the body portion of the energy storage device, the space immediately above the portion can be ensured. Therefore, the space efficiency in the energy storage apparatus can be enhanced. As a result, it is possible to reduce the influence of the gas on the coupling while enhancing the space efficiency in the energy storage apparatus.

The coupling may be disposed between each of a plurality of pairs of adjacent energy storage devices.

With this configuration, since the coupling is disposed between each of the plurality of pairs of adjacent energy storage devices, the first holder and the second holder are coupled to each other by the plurality of couplings. Accordingly, the rigidity of the busbar holding member can be enhanced. In each of the couplings as well, the upper end surface of a part of the coupling is located below or flush with the upper surface of the body portion of the energy storage device, so that the space immediately above the portion can be ensured in each of the couplings. Therefore, the space efficiency in the energy storage apparatus can be further enhanced.

The energy storage apparatus may include an exhaust member disposed on the coupling of the busbar holding member and forming an exhaust path of gas released from the gas release valve.

With this configuration, since the exhaust member is disposed on the coupling, the exhaust member can protect the coupling from the gas. Therefore, the influence of the gas on the coupling can be further reduced.

Since the exhaust member is disposed on the coupling in which the space immediately above is ensured, the exhaust member, that is, the exhaust path, can be formed as large as possible. Thus, the gas can be discharged smoothly. Hence, it is possible to reduce an increase in temperature in the exhaust member.

The coupling may have a concave portion forming the upper end surface of the part of the coupling, and the exhaust member may be disposed in the concave portion.

With this configuration, the coupling is provided with the concave portion forming the upper end surface, which is lower than or flush with the upper surface of the energy storage device, and the exhaust member is disposed in the concave portion, so that a part of the exhaust member can be disposed close to the upper surface of the energy storage device. As a result, the exhaust member, that is, the exhaust path, can be formed larger, and the gas can be discharged smoothly. It is thus possible to further reduce an increase in temperature in the exhaust member.

Since a part of the exhaust member is disposed in the concave portion of the coupling, the exhaust member can be positioned by the concave portion.

The energy storage apparatus may include a plurality of detection lines for detecting a state of each of the plurality of energy storage devices. The plurality of detection lines include a first detection line and a second detection line, the first holder includes a first detection line path that is a path of at least one first detection line of the plurality of detection lines, the second holder includes a second detection line path that is a path of a second detection line except for the at least one first detection line of the plurality of detection lines, and the first detection line and the second detection line avoid a space between the first holder and the second holder.

With this configuration, the first detection line avoids the space between the first holder and the second holder while being disposed in the first detection line path. On the other hand, the second detection line avoids the space between the first holder and the second holder while being disposed in the second detection line path. As described above, since the first detection line and the second detection line avoid the space between the first holder and the second holder, the space between the first holder and the second holder, that is, the space immediately above the coupling, can be further ensured.

The first detection line and the second detection line are disposed between the first holder and the second holder, that is, disposed avoiding the gas release valve, whereby the first detection line and the second detection line can be hardly exposed to the gas released from the gas release valve.

Hereinafter, an energy storage apparatus according to an embodiment of the present invention (also including modifications thereof) will be described with reference to the drawings. An embodiment described below illustrates a comprehensive or specific example. Numerical values, shapes, materials, components, placement positions of the components, connection forms, and the like shown in the embodiment below are merely examples and are not intended to limit the present invention. In the drawings, dimensions and the like are not illustrated strictly.

In the following description and drawings, a direction in which a pair of (positive electrode side and negative electrode side) electrode terminals are arranged in one energy storage device, a direction in which the short side surfaces of a case of the energy storage devices face each other, or a direction in which the long side surfaces of an outer case of an energy storage unit face each other is defined as an X-axis direction. A direction in which a plurality of energy storage devices are arranged, a direction in which the long side surfaces of the case of the energy storage device face each other, a direction in which the short side surfaces of the outer case of the energy storage unit face each other, or a direction in which the energy storage unit and a substrate unit are disposed side by side is defined as a Y-axis direction. A direction in which an outer case support of the energy storage unit and an outer case lid of the energy storage unit are disposed side by side, a direction in which the energy storage device and a busbar are disposed side by side, a direction in which a case body of the energy storage device and a lid of the energy storage device are disposed side by side, or a vertical direction is defined as a Z-axis direction. The X-axis direction, the Y-axis direction, and the Z-axis direction are directions intersecting with (in the present embodiment, orthogonal to) each other. It is conceivable that the Z-axis direction may not be the vertical direction depending on the use aspect, but for convenience of description, a description will be given below with the Z-axis direction as the vertical direction.

In the following description, an X-axis plus direction indicates an arrow direction of the X-axis, and an X-axis minus direction indicates a direction opposite to the X-axis plus direction. The same applies to the Y-axis direction and the Z-axis direction. Hereinafter, the Y-axis direction may also be referred to as a first direction, the X-axis direction may also be referred to as a second direction, and the Z-axis direction may also be referred to as a third direction. Expressions indicating relative directions or orientations, such as parallel and orthogonal, strictly include cases where the directions or orientations are not the same. Two directions being orthogonal to each other not only mean that the two directions are completely orthogonal to each other, but also mean that the two directions are substantially orthogonal to each other, that is, a difference of about several percent is included.

### (Embodiment)

### [1 Description of configuration of energy storage apparatus]

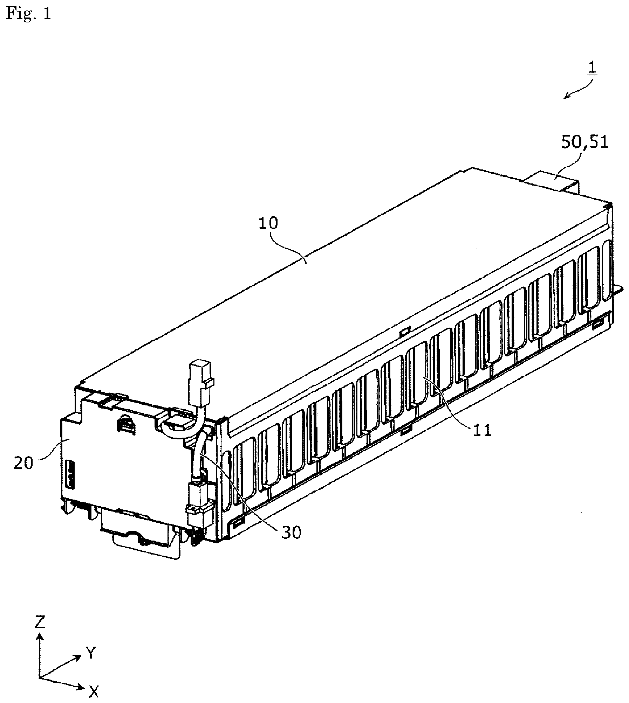

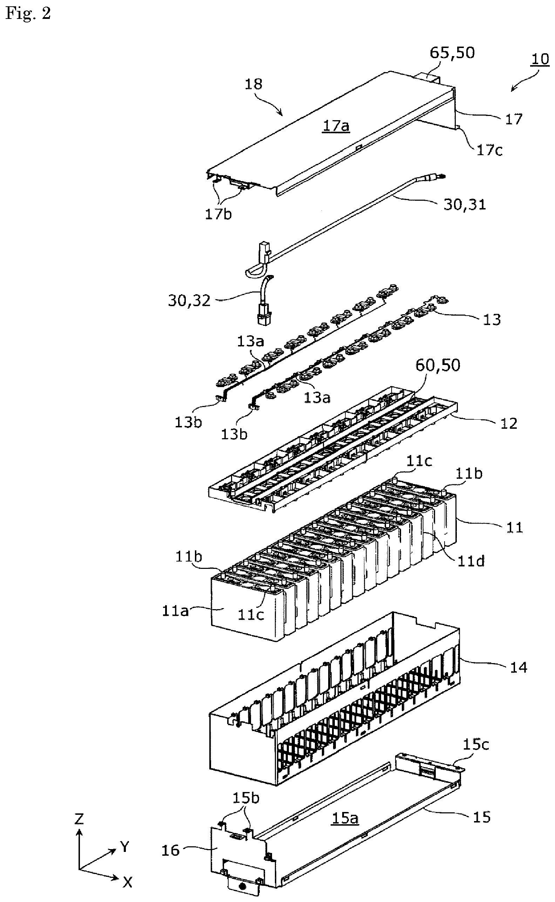

First, a configuration of an energy storage apparatus 1 according to the present embodiment will be described. Fig. 1 is a perspective view illustrating the appearance of the energy storage apparatus 1 according to the embodiment. Fig. 2 is an exploded perspective view illustrating each component when an energy storage unit 10 according to the embodiment is disassembled.

The energy storage apparatus 1 is an apparatus capable of storing electricity from the outside and releasing electricity to the outside and has a substantially rectangular parallelepiped shape in the present embodiment. The energy storage apparatus 1 is used for power storage applications, power supply applications, or the like. Specifically, the energy storage apparatus 1 is used as a stationary battery or the like used for home, a generator, or the like. The energy storage apparatus 1 can be used as a battery or the like for driving or starting an engine of a moving body such as an automobile, a motorcycle, a watercraft, a ship, a snowmobile, an agricultural machine, a construction machine, or a railway vehicle for electric railways. Examples of the automobile include an electric vehicle (EV), a hybrid electric vehicle (HEV), a plug-in hybrid electric vehicle (PHEV), and a gasoline vehicle. Examples of the railway vehicle for electric railways include a train, a monorail, and a linear motor car.

As illustrated in these drawings, the energy storage apparatus 1 includes the energy storage unit 10 and a substrate unit 20 attached to the energy storage unit 10. The energy storage unit 10 is a battery module (assembled battery) having a substantially rectangular parallelepiped shape elongated in the Y-axis direction. Specifically, the energy storage unit 10 includes: a plurality of energy storage devices 11; a busbar frame 12; an exhaust portion 50; a plurality of busbars 13; and an outer case 18 formed of an outer case body 14, an outer case support 15, and an outer case lid 17 which house these components. A cable 30 is connected to the energy storage unit 10. The energy storage unit 10 may include a binding member (end plate, side plate, etc.) that binds the plurality of energy storage devices 11.

The energy storage device 11 is a secondary battery (battery cell) capable of storing and releasing electricity and is specifically a nonaqueous electrolyte secondary battery such as a lithium ion secondary battery. The energy storage device 11 has a flat rectangular parallelepiped shape (prismatic shape), and in the present embodiment, sixteen energy storage devices 11 are arranged side by side in the Y-axis direction. The shape, arrangement position, number, and the like of the energy storage devices 11 are not particularly limited. The energy storage device 11 is not limited to a nonaqueous electrolyte secondary battery, but may be a secondary battery other than the nonaqueous electrolyte secondary battery or may be a capacitor. The energy storage device 11 may not be a secondary battery but may be a primary battery capable of using stored electricity without being charged by the user. The energy storage device 11 may be a battery using a solid electrolyte. The energy storage device 11 may be a laminate-type energy storage device.

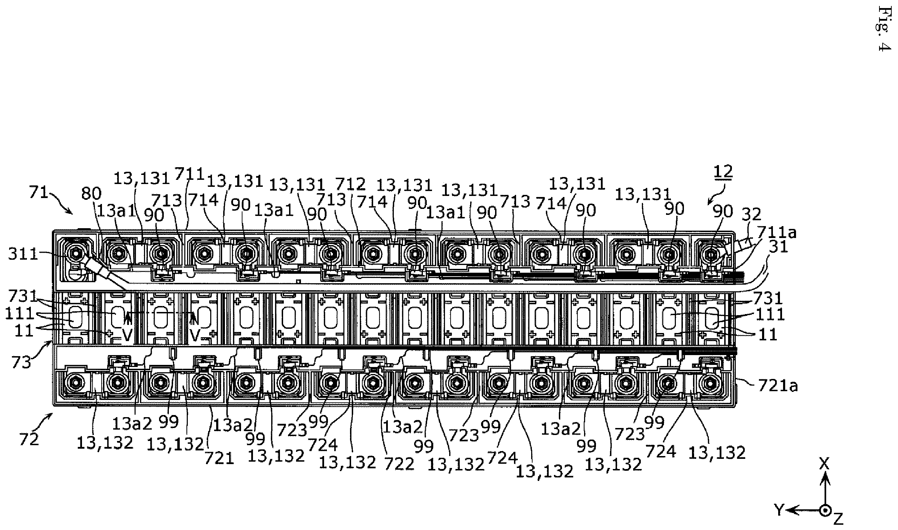

Specifically, the energy storage device 11 includes a metal case 11a that forms a body portion, and a positive electrode terminal 11b and a negative electrode terminal 11c, which are metal electrode terminals, are formed on a lid of the case 11a. That is, the positive electrode terminal 11b and the negative electrode terminal 11c are provided on the upper surface of the main body portion. In the lid of the case 11a, a gas release valve 111 (cf. Fig. 4), which releases gas to release pressure when the pressure increases in the case 11a, is provided between the positive electrode terminal 11b and the negative electrode terminal 11c. The plurality of energy storage devices 11 are arranged in orientations in which the respective gas release valves 111 face an identical direction (Z-axis plus direction). A flat plate-shaped spacer 11d having heat insulation properties is disposed between the adjacent energy storage devices 11. An electrolyte solution filling portion or the like for filling with an electrolyte solution may be provided in the lid of the case 11a. In the case 11a, an electrode assembly (also referred to as an energy storage element or a power generating element), a current collector (a positive current collector and a negative current collector), and the like are disposed, and an electrolyte solution (nonaqueous electrolyte) and the like are sealed, but a detailed description thereof is omitted.

The positive electrode terminal 11b and the negative electrode terminal 11c protrude upward (Z-axis plus direction) from the lid of the case 11a. By connecting the outermost positive electrode terminal 11b and the outermost negative electrode terminal 11c of the plurality of energy storage devices 11 to the cable 30, the energy storage apparatus 1 can store electricity from the outside and release electricity to the outside.

The cable 30 is an electric wire (also referred to as a power cable, as electric power cable, a power line, and an electric power line) through which a current (also referred to as charge-discharge current and main current) for charging and discharging the energy storage apparatus 1 (energy storage device 11) flows, and includes a positive power cable 31 at the positive electrode and a negative power cable 32 at the negative electrode. That is, the positive power cable 31 of the cable 30 is connected to the positive electrode terminal 11b of the energy storage device 11 at the end in the Y-axis plus direction, and the negative power cable 32 of the cable 30 is connected to the negative electrode terminal 11c of the energy storage device 11 at the end in the Y-axis minus direction among the plurality of energy storage devices 11.

The busbar frame 12 is a flat rectangular member capable of electrically insulating the busbar 13 from other members and restricting the positions of the busbars 13. The busbar frame 12 is formed of an insulating member, such as polycarbonate (PC), polypropylene (PP), or polyethylene (PE), which is similar to a substrate housing portion 100 of the substrate unit 20 to be described later. Specifically, the busbar frame 12 is placed above the plurality of energy storage devices 11 and is positioned with respect to the plurality of energy storage devices 11. A plurality of busbars 13 are placed and positioned on the busbar frame 12. With such a configuration, the respective busbars 13 are positioned with respect to the plurality of energy storage devices 11 and are joined to the positive electrode terminals 11b and the negative electrode terminals 11c included in the plurality of energy storage devices 11. The busbar frame 12 also has a function of reinforcing the outer case body 14 as an inner lid of the outer case 18. Details of the busbar frame 12 will be described later.

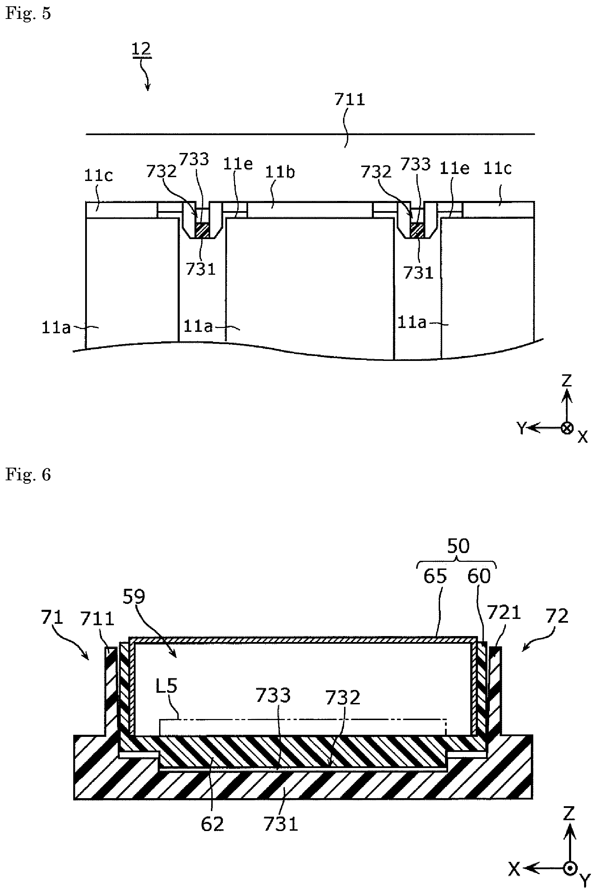

The exhaust portion 50 is disposed on the busbar frame 12 and constitutes an exhaust path 59 (cf. Fig. 6) of the gas released from the gas release valve 111 of each energy storage device 11. One end of the exhaust portion 50 in the Y-axis plus direction is an exhaust port 51 from which the gas is released and protrudes from one end of the outer case 18 in the Y-axis plus direction. Details of the exhaust portion 50 will be described later.

Each of the busbars 13 is a rectangular plate-shaped member that is disposed on the plurality of energy storage devices 11 (on the busbar frame 12) and electrically connects the electrode terminals of the plurality of energy storage devices 11 to each other. The busbar 13 is formed of a metal such as aluminum, an aluminum alloy, copper, a copper alloy, or stainless steel. In the present embodiment, the busbars 13 connect the positive electrode terminal 11b and the negative electrode terminal 11c of the adjacent energy storage devices 11 to connect the sixteen energy storage devices 11 in series. The plurality of busbars 13 are divided into a first busbar group 131 arranged along the Y-axis direction in the X-axis plus direction (one side) and a second busbar group 132 arranged along the Y-axis direction in the X-axis minus direction (the other side). The aspect of the connection of the energy storage devices 11 is not limited to the above, and series connection and parallel connection may be combined in any manner.

A detection line 13a is connected to the busbar 13 or the electrode terminal of the energy storage device 11. The detection line 13a is a cable for detecting the state of each energy storage device 11. The detection line 13a is an electric wire (also referred to as a communication cable, a control cable, a communication line, and a control line) for voltage measurement of the energy storage device 11, for temperature measurement of the energy storage device 11, or for voltage balancing between the energy storage devices 11. A thermistor (not illustrated) for measuring the temperature of the energy storage device 11 is disposed on the busbar 13 or the electrode terminal of the energy storage device 11, but the description thereof is omitted. A connector 13b is connected to the end of the detection line 13a in the Y-axis minus direction. The connector 13b is a connector connected to a substrate 200 of the substrate unit 20 to be described later. That is, the detection line 13a transmits information such as a voltage and a temperature of the energy storage device 11 to the substrate 200 of the printed circuit substrate unit 20 through the connector 13b. The detection line 13a also has a function of discharging the energy storage device 11 with a high voltage by controlling the substrate 200 to balance the voltages among the energy storage devices 11.

The outer case 18 is a rectangular (box-shaped) case (module case) constituting the outer case of the energy storage unit 10. That is, the outer case 18 is disposed outward of the energy storage devices 11 and the like, fixes the energy storage devices 11 and the like at predetermined positions, and protects the energy storage devices 11 and the like from an impact or the like. The outer case 18 includes an outer case body 14 constituting the body of the outer case 18, an outer case support 15 for supporting the outer case body 14, and an outer case lid 17 constituting the lid body (outer lid) of the outer case 18.

The outer case body 14 is a bottomed rectangular, cylindrical housing in which an opening is formed. The outer case body 14 is formed of an insulating member such as PC, PP, and PE, which is similar to the substrate housing portion 100 of the substrate unit 20 to be described later.

The outer case support 15 and the outer case lid 17 are members for protecting (reinforcing) the outer case body 14. The outer case support 15 and the outer case lid 17 are formed of a metal member such as stainless steel, aluminum, an aluminum alloy, iron, or a plated steel plate. The outer case support 15 and the outer case lid 17 may be formed of members made of the same material or may be formed of members made of different materials.

The outer case support 15 is a member for supporting the outer case body 14 from the lower side (Z-axis minus direction) and includes a bottom 15a, a substrate unit attachment portion 16, and connections 15b, 15c. The bottom 15a is a flat plate-shaped and rectangular portion constituting the bottom of the energy storage apparatus 1 and extending in parallel to the XY plane and in the Y-axis direction, and is disposed below the outer case body 14. The substrate unit attachment portion 16 is a flat plate-shaped and rectangular portion erected in the Z-axis plus direction from the end of the bottom 15a in the Y-axis minus direction, and the substrate unit 20 is attached to the substrate unit attachment portion 16. The connection 15b is a portion disposed at the end of the substrate unit attachment portion 16 in the Z-axis plus direction and protruding in the Y-axis minus direction, and is connected to the outer case lid 17. The connection 15c is a portion erected in the Z-axis plus direction from the end of the bottom 15a in the Y-axis plus direction and protruding in the Y-axis plus direction, and is connected to the outer case lid 17.

The outer case lid 17 is a member disposed to close the opening of the outer case body 14 and has a top surface 17a and connection parts 17b, 17c. The top surface 17a is a flat plate-shaped and rectangular portion constituting an upper surface portion of the energy storage apparatus 1 and extending in parallel to the XY plane and in the Y-axis direction, and is disposed above the outer case body 14. The connection 17b is a portion disposed at the end of the top surface 17a in the Y-axis minus direction and protruding in the Y-axis minus direction, and is connected to the connection 15b of the outer case support 15. The connection 17c is a portion extending in the Z-axis minus direction from the end of the top surface 17a in the Y-axis plus direction and protruding in the Y-axis plus direction, and is connected to the connection 15c of the outer case support 15. As described above, the outer case support 15 and the outer case lid 17 are fixed by connecting the connections 15b, 15c and the connection parts 17b, 17c by screwing or the like in a state where the outer case body 14 is sandwiched in the vertical direction.

The substrate unit 20 is a device capable of monitoring the state of the energy storage device 11 included in the energy storage unit 10 and controlling the energy storage device 11. In the present embodiment, the substrate unit 20 is a flat rectangular member attached to the end of the energy storage unit 10 in the longitudinal direction, that is, the side surface of the energy storage unit 10 in the Y-axis minus direction. Specifically, the substrate unit 20 is rotatably attached to the substrate unit attachment portion 16 that is provided on the outer case support 15 included in the outer case 18 of the energy storage unit 10.

### [2 Configuration of exhaust portion and busbar frame]

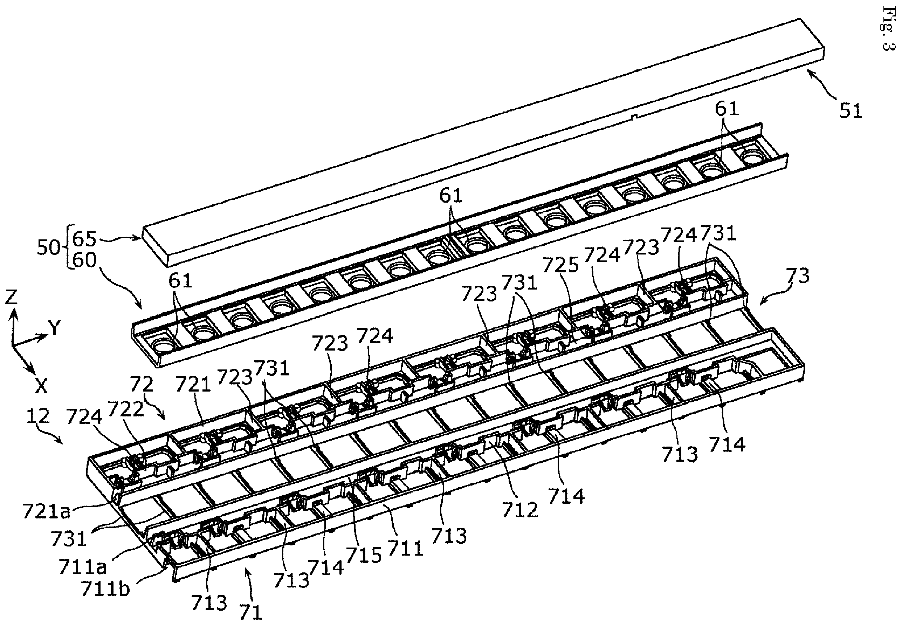

Fig. 3 is an exploded perspective view illustrating a schematic configuration of the exhaust portion 50 and the busbar frame 12 according to the embodiment.

As illustrated in Fig. 3, the exhaust portion 50 includes an exhaust member 60 and a lid member 65. The exhaust member 60 is disposed immediately above the gas release valve 111 of each energy storage device 11. The exhaust member 60 is formed in a U shape with its upper side opened as viewed in the Y-axis direction and is a resin member elongated in the Y-axis direction. A plurality of holes 61, through which the gas release valves 111 of the respective energy storage devices 11 are exposed, are formed in the bottom of the exhaust member 60.

The exhaust member 60 may be made of a resin having higher heat resistance than the busbar frame 12. When the busbar frame 12 is formed of PP, the exhaust member 60 may be formed of polyphenylene sulfide (PPS) having higher heat resistance than PP. In a case where the busbar frame and the exhaust member are integrally molded with a single resin, it is necessary to mold all the busbar frame and the exhaust member with a resin having high heat resistance. However, in the present embodiment, since only the exhaust member 60 separate from the busbar frame 12 needs to be formed with a resin having high heat resistance, the amount of the resin used can be reduced.

The lid member 65 is disposed above the exhaust member 60 and closes the open portion of the exhaust member 60. Specifically, the lid member 65 is formed in a U shape with its lower portion opened as viewed in the Y-axis direction and is a member elongated in the Y-axis direction. The lid member 65 is made of metal and has higher heat dissipation than the exhaust member 60. One end of the lid member 65 in the Y-axis plus direction has a lower portion and a distal end surface open in a state of protruding from the exhaust member 60. On the other hand, the other end of the lid member 65 is closed to prevent the gas from being released. The lid member 65 constitutes a gas exhaust path 59 together with the exhaust member 60 in a state of being housed in the exhaust member 60. The gas is released from the open portion at the one end of the lid member 65 described above. That is, the one end of the lid member 65 is the exhaust port 51 from which the gas is released. The exhaust port 51 protrudes outward from the end of the busbar frame 12 in the Y-axis plus direction. Thus, the gas released from the gas release valve 111 of each energy storage device 11 enters the exhaust path 59 formed by the exhaust member 60 and the lid member 65 from the hole 61 of the exhaust member 60. Thereafter, the gas passes through the exhaust path 59 and is released to the outside of the energy storage unit 10 from the exhaust port 51 located outward of the busbar frame 12.

Next, details of the busbar frame 12 will be described. Fig. 4 is a top view illustrating a schematic configuration of the busbar frame 12 according to the embodiment. In Fig. 4, the energy storage device 11, the busbar 13, the positive power cable 31, the negative power cable 32, and the plurality of detection lines 13a are also illustrated.

As illustrated in Fig. 3 and Fig. 4, the busbar frame 12 is an example of a busbar holding member that is disposed on the plurality of energy storage devices 11 and holds the plurality of busbars 13. Specifically, the busbar frame 12 includes a first holder 71, a second holder 72, and a coupling 73. Among the plurality of detection lines 13a, a plurality of detection lines 13a held by the first holder 71 are referred to as first detection lines 13a1. Among the plurality of detection lines 13a, a plurality of detection lines 13a held by the second holder 72 are referred to as second detection lines 13a2.

The first holder 71 is a portion of the busbar frame 12 in the X-axis plus direction (on one side) and holds the first busbar group 131 and the positive power cable 31. The first holder 71 also holds the plurality of first detection lines 13a1 connected to the electrode terminals (the positive electrode terminals 11b or the negative electrode terminals 11c) of the respective energy storage devices 11 in the X-axis plus direction or the busbars 13 included in the first busbar group 131.

The first holder 71 is disposed in the X-axis plus direction with respect to the gas release valves 111 of the respective energy storage devices 11. The first holder 71 includes a first outer wall 711 surrounding the outer periphery of the first holder 71, and a first surrounding wall 712 surrounding each busbar 13 together with the first outer wall 711.

A pair of first notches 711a, 711b is formed at the end of the first outer wall 711 in the Y-axis minus direction. In the one first notch 711a of the pair of first notches 711a, 711b, the positive power cable 31 and the plurality of first detection lines 13a1 are disposed to penetrate the one first notch 711a. In the other first notch 711b, the negative power cable 32 is disposed to penetrate therethrough.

The first surrounding wall 712 is disposed in the X-axis plus direction in the first outer wall 711 and is elongated in the Y-axis direction. The end of the first surrounding wall 712 in the Y-axis plus direction is disposed between the energy storage device 11 at the end in the Y-axis plus direction and the energy storage device 11 adjacent to the first surrounding wall 712. The end of the first surrounding wall 712 in the Y-axis minus direction extends to the vicinity of the first notch 711a of the first outer wall 711.

In the first surrounding wall 712, a plurality of first partition walls 713 disposed between the busbars 13 and a plurality of first partitions 714 disposed between the energy storage devices 11 are provided. The first partition wall 713 has a flat plate shape parallel to the XZ plane, and the upper end surface thereof is flush with the upper end surface of the first outer wall 711. The first partition 714 is a portion elongated in the X-axis direction and is lower in height than the first partition wall 713. Each of the busbars 13 is disposed to straddle the corresponding first partition 714.

In the first outer wall 711, a region in the X-axis minus direction with respect to the first surrounding wall 712 is a first cable path portion 715 penetrating along the Y-axis direction. The first cable path portion 715 is disposed between the gas release valve 111 of each energy storage device 11 and each busbar 13 included in the first busbar group 131. As described above, the first cable path portion 715 is disposed inward of the first busbar group 131 in the X-axis direction in the busbar frame 12.

The positive power cable 31 and the plurality of first detection lines 13a1 are disposed in the first cable path portion 715. The first cable path portion 715 forms a path of the positive power cable 31 and the plurality of first detection lines 13a1. That is, the first cable path portion 715 can also be said to be a first detection line path that is a path of the plurality of first detection lines 13a1. The plurality of first detection lines 13a1 and the positive power cable 31 are disposed in the first cable path portion 715 to avoid the space between the first holder 71 and the second holder 72, that is, the space above the coupling 73.

In the first cable path portion 715, each of the positive power cable 31 and the plurality of first detection lines 13a1 is disposed in an orientation substantially along the Y-axis direction. The first cable path portion 715 includes a guide 80 for guiding one end of the positive power cable 31. The first cable path portion 715 includes a plurality of detection line holder 90 that hold the first detection line 13a1. Details of the guide 80 and the detection line holder 90 will be described later.

The second holder 72 is a portion of the busbar frame 12 in the X-axis minus direction (the other side). The second holder 72 holds the second busbar group 132 and the plurality of second detection lines 13a2 connected to the electrode terminals (the positive electrode terminals 11b or the negative electrode terminals 11c) of the respective energy storage devices 11 in the X-axis minus direction or the busbars 13 included in the second busbar group 132.

The second holder 72 is disposed in the X-axis minus direction with respect to the gas release valves 111 of the respective energy storage devices 11. The second holder 72 has a second outer wall 721 surrounding the outer periphery of the second holder 72 and a second surrounding wall 722 surrounding each of the busbars 13 together with the second outer wall 721.

A second notch 721a is formed at the end of the second outer wall 721 in the Y-axis minus direction. In the second notch 721a, the plurality of second detection lines 13a2 are disposed to penetrate therethrough.

The second surrounding wall 722 is disposed in the second outer wall 721 in the X-axis minus direction and is elongated in the Y-axis direction. The end of the second surrounding wall 722 in the Y-axis plus direction is continuous with the end of the second outer wall 721 in the Y-axis plus direction. The end of the second surrounding wall 722 in the Y-axis minus direction extends to the vicinity of the second notch 721a of the second outer wall 721.

In a region of the second surrounding wall 722 in the X-axis minus direction, a plurality of second partition walls 723 disposed between the busbars 13 and a plurality of second partitions 724 disposed between the energy storage devices 11 are provided. The second partition wall 723 has a flat plate shape parallel to the XZ plane, and the upper end surface thereof is flush with the upper end surface of the second outer wall 721. The second partition 724 is a portion elongated in the X-axis direction and is lower in height than the second partition wall 723. Each of the busbars 13 is disposed to straddle the corresponding second partition 724.

In the second outer wall 721, a region in the X-axis plus direction with respect to the second surrounding wall 722 is a second cable path portion 725 penetrating along the Y-axis direction. The second cable path portion 725 is disposed between the gas release valve 111 of each energy storage device 11 and each busbar 13 included in the second busbar group 132. As described above, the second cable path portion 725 is disposed inward of the second busbar group 132 in the X-axis direction in the busbar frame 12.

In the second cable path portion 725, the plurality of second detection lines 13a2 are disposed. The second cable path portion 725 can be said to be a second detection line path that is a path of the plurality of second detection lines 13a2. The plurality of second detection lines 13a2 are disposed in the second cable path portion 725 to avoid the space between the first holder 71 and the second holder 72, that is, the space above the coupling 73.

In the second cable path portion 725, each of the plurality of second detection lines 13a2 is disposed in an orientation substantially along the Y-axis direction. In the second cable path portion 725, a plurality of detection line locking portions 99 for locking the respective second detection lines 13a2 are provided. The plurality of detection line locking portions 99 are arranged along the Y-axis direction. The detection line locking portion 99 is a protrusion elongated in the X-axis direction, and the space through which the second detection line 13a2 penetrates in the Y-axis direction is formed below the detection line locking portion 99. By the second detection line 13a2 penetrating the space, the detection line locking portion 99 prevents the lifting of the second detection line 13a2. The plurality of detection line locking portions 99 all have the same shape, but the number of second detection lines 13a2 to be locked is different. Specifically, as illustrated in Fig. 4, the detection line locking portion 99 farthest from the second notch 721a, that is, the detection line locking portion 99 disposed farthest in the Y-axis plus direction, holds one second detection line 13a2. The number of the second detection lines 13a2 locked by the detection line locking portions 99 can be increased one by one in the Y-axis minus direction. In a portion where the number of the second detection lines 13a2 is large, one detection line locking portion 99 may or may not hold all the second detection lines 13a2.

As illustrated in Figs. 3 and 4, the coupling 73 is a portion for coupling the first holder 71 with the second holder 72. Specifically, the coupling 73 includes a plurality of couplings 731 elongated in the X-axis direction and having one end coupled to first holder 71 and the other end coupled to second holder 72. The plurality of couplings 731 are arranged at predetermined intervals in the Y-axis direction. Among the plurality of couplings 731, the coupling 731 at the end in the Y-axis minus direction is disposed outward of the energy storage device 11 at the end in the Y-axis minus direction. The coupling 731 at the end in the Y-axis plus direction is disposed outward of the energy storage device 11 at the end in the Y-axis plus direction. The couplings 731 except for the above couplings are each disposed between a pair of adjacent energy storage devices 11. As described above, the plurality of couplings 731 are disposed at positions retracted from the gas release valves 111 of the respective energy storage devices 11. In other words, the gas release valves 111 of the respective energy storage devices 11 are exposed from the plurality of couplings 731 in a top view.

### [3 Coupling]

Fig. 5 is an explanatory view illustrating a positional relationship between the coupling 731 and the energy storage device 11 according to the embodiment. Specifically, Fig. 5 is a view of a cross section including a line V-V in Fig. 4. In Fig. 5, the energy storage device 11 is illustrated in a plan view, and the coupling 731 is illustrated in a cross-sectional view. Fig. 6 is a cross-sectional view illustrating a positional relationship between the coupling 731 and the exhaust portion 50 according to the embodiment. Specifically, Fig. 6 is a cross-sectional view obtained by cutting the position of the coupling 731 along the XZ plane.

As illustrated in Figs. 5 and 6, a concave portion 732 is formed at the center in the X-axis direction on the upper surface of the coupling 731. A bottom surface 733 of the concave portion 732 constitutes the upper end surface of a part of the coupling 731 and is formed in a planar shape parallel to the XY plane. The bottom surface 733 of the concave portion 732 is disposed below an upper surface 11e of the case 11a (body portion) of the energy storage device 11 (cf. Fig. 5). It is sufficient that the upper end surface of a part of the coupling 731 be disposed below the upper end (a portion located on the most plus side in the Z-axis direction) of the case 11a of the energy storage device 11. The upper end surface of a part of the coupling 731 may be disposed flush with the upper surface of the case 11a.

As illustrated in Fig. 6, the lower end of the exhaust member 60 is disposed in the concave portion 732. To be more specific, a convex portion 62 protruding downward is formed on a portion of the lower surface of the exhaust member 60 corresponding to the coupling 731. The convex portion 62 is housed in the concave portion 732 of the coupling 731. The convex portion 62 is disposed in the concave portion 732, so that the exhaust member 60 is positioned with respect to the busbar frame 12. The strength of the exhaust member 60 is increased by thickening the portion where the convex portion 62 exists. Although the inner bottom surface of the exhaust member 60 can be thickened by being bulged, in this case, the exhaust path 59 may be narrowed to hinder smooth exhaust (cf. two-dot chain line L5 in Fig. 6). In the present embodiment, the convex portion 62 is provided on the lower surface of exhaust member 60, so that the exhaust path 59 is prevented from being narrowed while a part of exhaust member 60 is thickened. In particular, in the present embodiment, since the coupling 731 is provided with the concave portion 732, the thickness can be further increased by causing the convex portion 62 to protrude toward the inside of the concave portion 732.

As described above, the bottom surface 733 (upper end surface) of the concave portion 732, which is a part of the coupling 731, is disposed below the upper surface 11e of the case 11a of the energy storage device 11, whereby the space immediately above the portion can be ensured to thicken a part of the exhaust member 60. That is, space efficiency in the energy storage apparatus 1 is enhanced. In a case where priority is given to improvement in the strength of the exhaust member 60, the inner bottom surface of the exhaust member 60 may be expanded.

### [4 Guide]

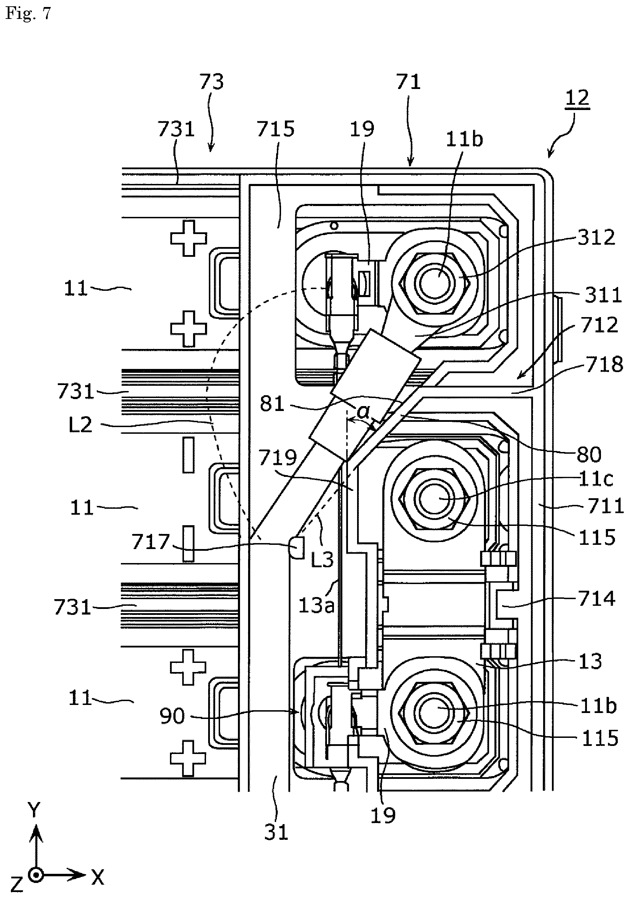

Next, details of the guide 80 will be described. Fig. 7 is a top view illustrating a schematic configuration of the guide 80 according to the embodiment.

As illustrated in Fig. 7, the guide 80 is a portion for guiding one end of the positive power cable 31 to an inclined position with respect to the Y-axis direction in the first cable path portion 715. A general-purpose round terminal 311 is attached to the one end of the positive power cable 31. The round terminal 311 is screwed together with a connection terminal 19 of the detection line 13a with a nut 312 to the positive electrode terminal 11b of the energy storage device 11 at the end in the Y-axis plus direction among the plurality of energy storage devices 11. The guide 80 supports the one end of the positive power cable 31 from the side to guide the one end to an inclined position with respect to the Y-axis direction.

It is assumed that the one end of the positive power cable 31 is disposed in an orientation orthogonal to the Y-axis direction, that is, the one end of the positive power cable 31 is disposed in an orientation along the X-axis direction. With the positive power cable 31 being thicker and less likely to bend than the detection line 13a, when one end is disposed in the orientation orthogonal to the Y-axis direction through the round terminal 311, there is a possibility that the positive power cable protrudes toward the coupling 73 as indicated by a broken line L2 illustrated in Fig. 7. For allowing this, the first holder 71 needs to be made larger in the X-axis minus direction, but in this case, the exhaust portion 50 needs to be reduced in size. That is, there is a possibility that exhaust performance deteriorates due to the narrowing of the exhaust path 59.

In the present embodiment, since the guide 80 guides the one end of the positive power cable 31 to an inclined position with respect to the Y-axis direction, the positive power cable 31 need not be bent sharply. Accordingly, the positive power cable 31 can be housed in the first cable path portion 715 without increasing the size of the first holder 71.

To be more specific, the guide 80 is provided at the end of the first surrounding wall 712 in the Y-axis plus direction. The end of the first surrounding wall 712 in the Y-axis plus direction includes a first wall body 718 having a flat plate shape and parallel to the XZ plane and a second wall body 719 having a flat plate shape and parallel to the YZ plane. A portion disposed between the first wall body 718 and the second wall body 719 and coupling the first wall body 718 with the second wall body 719 is the guide 80. It can also be said that the guide 80 is a corner portion provided at the end of the first surrounding wall 712 in the Y-axis plus direction. The guide 80 is disposed between the energy storage device 11 disposed at the end of the plurality of energy storage devices 11 in the Y-axis plus direction and the busbar 13 disposed at the end of the first busbar group 131 in the Y-axis plus direction, and functions as a barrier. If the one end of the positive power cable 31 should be detached from the energy storage device 11, or at the time of connection work or detachment work, the guide 80 can block the one end of the positive power cable 31 from coming into contact with the busbar 13.

The guide 80 is a flat plate-shaped wall body and has a flat outer side surface 81 supporting the one end of the positive power cable 31 from the side. Accordingly, the one end of the positive power cable 31 is supported in a linear state. An angle α on the acute-angled side formed by an outer side surface 81 of the guide 80 and the Y-axis direction is less than 45 degrees. That is, one end of the positive power cable 31 guided by the guide 80 is also disposed at substantially the same angle with respect to the Y-axis direction. Hence, it is possible to reduce a moment applied to a connection portion between the one end of the positive power cable 31 and the energy storage device 11 when the other end of the positive power cable 31 is pulled in the Y-axis minus direction.

In the first cable path portion 715, a locking piece 717 for locking the positive power cable 31 is provided at a position in the Y-axis minus direction with respect to the guide 80. Specifically, the locking piece 717 is disposed on an extension line (broken line L3) of guide 80. The locking piece 717 locks a boundary portion between a portion along the Y-axis direction and an inclined portion in the positive power cable 31. When the other end of the positive power cable 31 is pulled in the Y-axis minus direction, the locking piece 717 receives a part of the tension. Therefore, the moment applied to the connection portion between the one end of the positive power cable 31 and the energy storage device 11 can be further reduced.

### [5 Detection line holder]

As illustrated in Fig. 4, among the plurality of detection line holders 90, one detection line holder 90 is disposed near the energy storage device 11 disposed at the end in the Y-axis minus direction. Each of the remaining detection line holders 90 is disposed near the energy storage device 11 in the Y-axis minus direction out of the pair of energy storage devices 11 connected to one busbar 13 of the first busbar group 131. With the detection line holders 90 having substantially the identical configurations, one detection line holder 90 will be described here as an example.

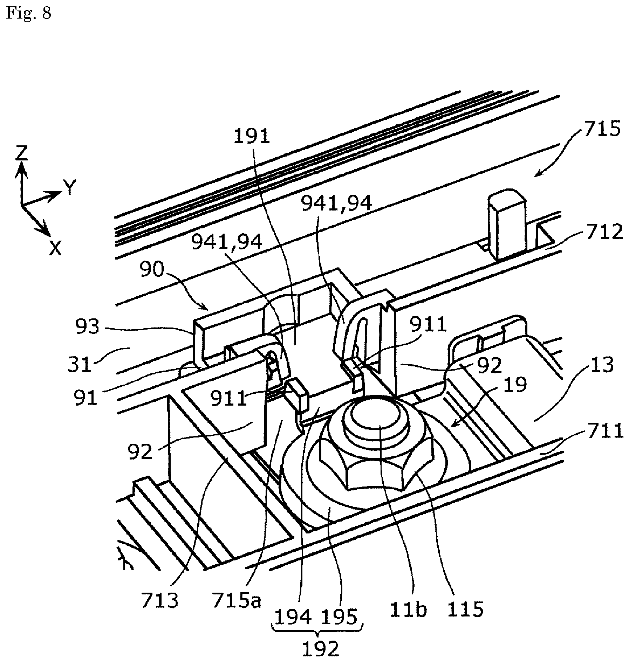

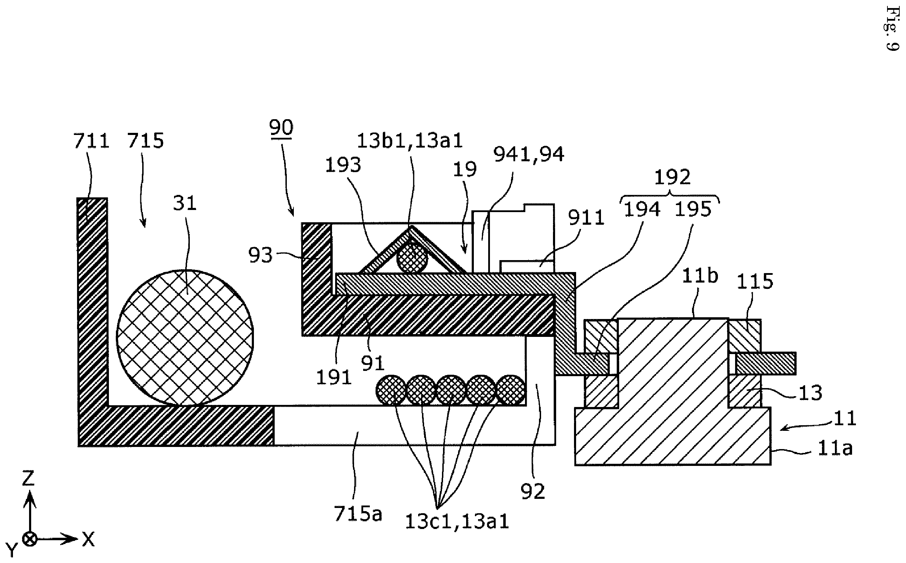

Fig. 8 is a perspective view illustrating a schematic configuration of the detection line holder 90 according to the embodiment. Fig. 9 is a cross-sectional view illustrating a schematic configuration of the detection line holder 90 according to the embodiment.

As illustrated in Fig. 8 and Fig. 9, the detection line holder 90 holds the first detection line 13a1 connected to the energy storage device 11 near the detection line holder 90.

First, the connection terminal 19 of the first detection line 13a1 will be described. The connection terminal 19 is connected to a tip of the first detection line 13a1. The connection terminal 19 is formed of a sheet metal and is formed in a stepped shape such that a base 191 thereof is located above a tip 192. The base 191 is provided with a fixing hook 193 for fixing the tip of the first detection line 13a1. The fixing hook 193 and the base 191 hold the first detection line 13a1 to fix the first detection line 13a1. The tip 192 of the connection terminal 19 has a hanging portion 194 hanging continuously from the tip of the base 191, and an attachment portion 195 continuous from the tip of the hanging portion 194 and extending parallel to the base 191. The attachment portion 195 is formed in an annular shape in a plan view (as viewed in the Z-axis direction), and the electrode terminal (positive electrode terminal 11b) of the energy storage device 11 is inserted in the opening of the attachment portion. A nut 115 is screwed to the positive electrode terminal 11b in a state where the busbar 13 and the attachment portion 195 penetrate the nut 115. Accordingly, the busbar 13 and the attachment portion 195 are fixed to the positive electrode terminal 11b. The connection terminal of the second detection line 13a2 is equivalent to the connection terminal 19 of the first detection line 13a1.

Next, the detection line holder 90 will be described in detail. The detection line holder 90 holds the first detection line 13a1 connected to the energy storage device 11 near the detection line holder 90 and the connection terminal 19 of the first detection line 13a1. In the following description, among the plurality of first detection lines 13a1, the first detection line 13a1 connected to the energy storage device 11 near the detection line holder 90 is referred to as a connection target line 13b1, and the other first detection lines 13a1 different from the connection target line 13b1 are referred to as non-target lines 13c1.

Specifically, the detection line holder 90 is disposed above (in the Z-axis plus direction) the inner bottom surface of the first cable path portion 715. The detection line holder 90 includes a first wall 91, a second wall 92, a third wall 93, and a spring 94.

The first wall 91 is a portion for supporting the base 191 of the connection terminal 19 from below. The first wall 91 is a flat plate-shaped portion disposed above the inner bottom surface of the first cable path portion 715 and parallel to the inner bottom surface. On the inner bottom surface of the first cable path portion 715, an opening 715a is formed in a portion facing the first wall 91. Since the inner bottom surface of the first cable path portion 715 and the first wall 91 are separated from each other in the vertical direction, a plurality of non-target lines 13c1 are disposed in the space formed by the inner bottom surface and the first wall 91. At this time, the plurality of non-target lines 13c1 are bridged over the opening 715a. Meanwhile, the connection terminal 19 of the connection target line 13b1 is held above the plurality of non-target lines 13c1 by being disposed on the first wall 91. That is, in a plan view (as viewed in the Z-axis direction), the connection terminal 19 and at least one of the plurality of non-target lines 13c1 are disposed to overlap each other. The space formed by the inner bottom surface of the first cable path portion 715 and the first wall 91 needs to have a size in which at least one non-target line 13c1 can overlap the connection terminal 19 of the connection target line 13b1 in a plan view.

On the upper surface of the first wall 91, a pair of restricting protrusions 911 disposed to sandwich the base 191 of the connection terminal 19 in the Y-axis direction is provided. By sandwiching the base 191 between the pair of restricting protrusions 911, the connection terminal 19 is positioned in the Y-axis direction. The hanging portion 194 of the connection terminal 19 is brought into contact with the end surface (the end surface in the X-axis plus direction) of the first wall 91 facing the energy storage device 11. Thus, the connection terminal 19 is positioned in the X-axis direction.

The second wall 92 is a flat plate-shaped portion provided below the first wall 91 at a position sandwiching the first wall 91 in the Y-axis direction. The second wall 92 is also a part of the first surrounding wall 712. The second wall 92 is disposed at a position corresponding to the end of the first wall 91 in the X-axis plus direction. The second wall 92 is disposed between the hanging portion 194 of the connection terminal 19 and the non-target line 13c1. Hence, the second wall 92 serves as a barrier, so that interference between the non-target line 13c1 and the connection terminal 19 can be prevented. At the time of assembly, when the non-target line 13c1 is slid along the inner bottom surface of the first cable path portion 715 and brought into contact with the second wall 92, the non-target line 13c1 can be reliably disposed at a position overlapping the connection terminal 19 in a plan view.

The third wall 93 is erected on the upper surface of the first wall 91 at the end in the Y-axis plus direction and the end in the X-axis minus direction. That is, the third wall 93 is disposed between the positive power cable 31 and the connection terminal 19. The third wall 93 serves as a barrier to prevent interference between the positive power cable 31 and the connection terminal 19.

The spring 94 is a portion for restricting the connection terminal 19. Specifically, the spring 94 includes a pair of leaf springs 941. The pair of leaf springs 941 is disposed above the first wall 91 and faces each other at a predetermined interval in the Y-axis direction. Each of the pair of leaf springs 941 is a rod-shaped body hanging from the upper end of the detection line holder 90. Each of the pair of leaf springs 941 is inclined so as to approach the other leaf spring 941 toward the lower end. That is, the distance between the pair of leaf springs 941 in the Y-axis direction is the narrowest at the lower end and the widest at the upper end. When the base 191 of the connection terminal 19 is disposed between the pair of leaf springs 941 and lowered along the pair of leaf springs 941 at the time of assembly, the pair of leaf springs 941 is elastically deformed to allow the lowering of the connection terminal 19. When the base 191 of the connection terminal 19 passes through the lower ends of the pair of leaf springs 941, the pair of leaf springs 941 returns to the original shape. At this time, the lower ends of the pair of leaf springs 941 are disposed immediately above the base 191 of the connection terminal 19. That is, the pair of leaf springs 941 holds base 191 of connection terminal 19. As a result, the pair of leaf springs 941 restricts the rise of the connection terminal 19 and is positioned in the vertical direction in the connection terminal 19.

The plurality of detection line holders 90 all have the same shape, but the number of the non-target lines 13c1 disposed in the space formed by the inner bottom surface of the first cable path portion 715 and the first wall 91 is different. Specifically, as illustrated in Fig. 4, the non-target line 13c1 is not disposed in the space of the detection line holder 90 farthest from the first notch 711a, that is, the detection line holder 90 disposed in the Y-axis plus direction. The number of the non-target lines 13c1 disposed in the space can be increased one by one toward the Y-axis minus direction. At a portion where the number of the non-target lines 13c1 is large, all the non-target lines 13c1 may be or may not be disposed in the space of one detection line holder 90.

### [6 Description of effects]

As described above, the energy storage apparatus 1 according to the present embodiment includes: a plurality of energy storage devices 11 that have gas release valves 111, respectively, and are arranged in orientations in which the gas release valves 111 face an identical direction; a plurality of busbars 13 electrically connected to the plurality of energy storage devices 11; and a busbar frame 12 (busbar holding member) that is disposed on the plurality of energy storage devices 11 and holds the plurality of busbars 13. The energy storage device 11 includes a case 11a (body portion) including each of the gas release valves 111 on an upper surface, and a pair of electrode terminals (positive electrode terminal 11b and negative electrode terminal 11c) disposed on the upper surface of the case 11a. The busbar frame 12 includes a first holder 71 disposed on the plurality of energy storage devices 11 and on one side of the gas release valve 111, a second holder 72 disposed on the plurality of energy storage devices 11 and on the other side of the gas release valve 111, and a coupling 731 that is disposed between at least a pair of adjacent energy storage devices 11 among the plurality of energy storage devices 11 and couples the first holder 71 with the second holder 72. An upper end surface (bottom surface 733) of a part of the coupling 731 is disposed below or flush with the upper surface 11e of the case 11a.

With this configuration, the coupling 731 is disposed between at least a pair of adjacent energy storage devices 11, and hence, the gas release valve 111 of each energy storage device 11 is brought into an exposed state. It is thus possible to reduce the coupling 731 from being affected by the gas released from the gas release valve 111. Since the bottom surface 733 of the coupling 731 is disposed below or flush with the upper surface 11e of the case 11a of the energy storage device 11, the space immediately above the portion can be ensured. Therefore, the space efficiency in the energy storage apparatus 1 can be enhanced. As a result, it is possible to reduce the influence of the gas on the coupling 731 while enhancing the space efficiency in the energy storage apparatus 1.

The coupling 731 is disposed between each of the plurality of pairs of adjacent energy storage devices 11.

With this configuration, since the coupling 731 is disposed between each of the plurality of pairs of adjacent energy storage devices 11, the first holder 71 and the second holder 72 are coupled to each other by the plurality of couplings 731. Accordingly, the rigidity of the busbar frame 12 can be enhanced. In each of the couplings 731 as well, the bottom surface 733 is located below or flush with the upper surface 11e of the case 11a of the energy storage device 11, so that the space immediately above the portion can be ensured in each of the couplings 731. Therefore, the space efficiency in the energy storage apparatus 1 can be further enhanced.

The energy storage apparatus 1 includes an exhaust member 60 disposed on the coupling 731 of the busbar frame 12 and forming an exhaust path 59 of the gas released from the gas release valve 111.

With this configuration, since the exhaust member 60 is disposed on the coupling 731, the exhaust member 60 can protect the coupling 731 from the gas. Therefore, the influence of the gas on the coupling 731 can be further reduced.

The coupling 731 includes a concave portion 732 forming the upper end surface of the part, and the exhaust member 60 is disposed in the concave portion 732.

With this configuration, the coupling 731 is provided with the concave portion 732 forming the upper end surface (the bottom surface 733), which is lower than or flush with the upper surface 11e of the case 11a of the energy storage device 11, and the exhaust member 60 is disposed in the concave portion 732, so that a part of the exhaust member 60 can be disposed close to the upper surface of the case 11a of the energy storage device 11. As a result, the exhaust member 60, that is, the exhaust path 59, can be formed larger, and the gas can be discharged smoothly. It is thus possible to further reduce an increase in temperature in the exhaust member 60.

Since a part of the exhaust member 60 is disposed in the concave portion 732 of the coupling 731, the exhaust member 60 can be positioned by the concave portion 732.

The energy storage apparatus 1 includes a plurality of detection lines 13a for detecting the state of each of the plurality of energy storage devices 11. The first holder 71 includes a first cable path portion 715 (first detection line path) that is a path of at least one first detection line 13a1 of the plurality of detection lines 13a, the second holder 72 includes a second cable path portion 725 (second detection line path) that is a path of a second detection line 13a2 except for the at least one first detection line 13a1 of the plurality of detection lines 13a, and the first detection line 13a1 and the second detection line 13a2 avoid the space between the space between the first holder 71 and the second holder 72.

With this configuration, the first detection line 13a1 avoids the space between the first holder 71 and the second holder 72 while being disposed in the first cable path portion 715. On the other hand, the second detection line 13a2 avoids the space between the first holder 71 and the second holder 72 while disposed in the second cable path portion 725. As described above, since the first detection line 13a1 and the second detection line 13a2 avoid the space between the first holder 71 and the second holder 72, the space between the first holder 71 and the second holder 72, that is, the space immediately above the coupling 731, can be further ensured.

The first detection line 13a1 and the second detection line 13a2 are disposed between the first holder 71 and the second holder 72, that is, disposed avoiding the gas release valve 111, whereby the first detection line 13a1 and the second detection line 13a2 can be hardly exposed to the gas released from the gas release valve 111.

The energy storage apparatus 1 according to the present embodiment includes the plurality of energy storage devices 11 arranged along the Y-axis direction (predetermined direction), the plurality of busbars 13 electrically connected to the plurality of energy storage devices 11, the busbar frame 12 (busbar holding member) that is disposed on the plurality of energy storage devices 11 and holds the plurality of busbars 13, and the positive power cable 31 (power cable) electrically connected to one energy storage device 11 of the plurality of energy storage devices 11, the busbar frame 12 includes the first cable path portion 715 (cable path portion) that is disposed inward of the plurality of busbars 13 and in which the positive power cable 31 is disposed in an orientation along the Y-axis direction, and the first cable path portion 715 includes the guide 80 that guides one end of the positive power cable 31 connected to one energy storage device 11 to an inclined position with respect to the Y-axis direction.

With this configuration, by inclining the one end of the positive power cable 31 with respect to the arrangement direction (Y-axis direction) of the plurality of energy storage devices 11, it is possible to make the bending amount of the positive power cable 31 smaller while ensuring an installation space for the connection structure more than in a case where the one end is orthogonal to the arrangement direction. That is, the general-purpose round terminal 311 can be adopted. As described above, since the busbar frame 12 is provided with the guide 80 that guides the one end of the positive power cable 31 to an inclined position with respect to the Y-axis direction, it is possible to stably hold the one end of the positive power cable 31 while reducing a load on the positive power cable 31.

The plurality of energy storage devices 11 includes the respective gas release valves 111 and are arranged in orientations in which the gas release valves 111 face the identical direction, and the first cable path portion 715 is disposed between the plurality of busbars 13 and the respective gas release valves 111 of the plurality of energy storage devices 11.

With this configuration, the first cable path portion 715 is disposed between the plurality of busbars 13 and the respective gas release valves 111 of the plurality of energy storage devices 11, and hence, the positive power cable 31 in the first cable path portion 715 is also disposed at a position retracted from the gas release valve 111. Therefore, the positive power cable 31 can be hardly exposed to the gas released from the gas release valve 111. As a result, it is possible to reduce the burden on the positive power cable 31 during the release of the gas.

Since the guide 80 includes a planar shape, the one end of the positive power cable 31 can be guided linearly. Therefore, the load on the positive power cable 31 can be further reduced.

An angle α on the acute-angled side formed by the guide 80 and the Y-axis direction is less than 45 degrees.

With this configuration, the angle α on the acute-angled side formed by the guide 80 and the Y-axis direction is set to less than 45 degrees, so that one end of the positive power cable 31, which has been guided by the guide 80, is also disposed at substantially the same angle with respect to the Y-axis direction. Hence, it is possible to reduce a moment applied to a connection portion between the one end of the positive power cable 31 and the energy storage device 11 when the other end of the positive power cable 31 is pulled. Accordingly, the connection between the one end of the positive power cable 31 and the energy storage device 11 can be stabilized.

The guide 80 is disposed between one busbar 13 of the plurality of busbars 13 and one energy storage device 11.

With this configuration, since the guide 80 is disposed between one busbar 13 of the plurality of busbars 13 and one energy storage device 11, if one end of the positive power cable 31 should be detached from the energy storage device 11, it is possible to prevent the guide 80 from becoming a barrier and interfering with the busbars 13 and other energy storage devices 11.

The energy storage apparatus 1 according to the present embodiment includes: the plurality of energy storage devices 11 arranged along the Y-axis direction (predetermined direction); the plurality of busbars 13 electrically connected to the plurality of energy storage devices 11; the plurality of detection lines 13a electrically connected to at least two energy storage devices 11 in order to detect the states of the at least two energy storage devices 11 among the plurality of energy storage devices 11; and the busbar frame 12 (busbar holding member) that is disposed on the plurality of energy storage devices 11 and holds the plurality of busbars 13 and the plurality of detection lines 13a. The busbar frame 12 includes the detection line holder 90 that is disposed near one energy storage device 11 of the at least two energy storage devices 11 and holds the connection terminal 19 of a connection target line 13b1 connected to the energy storage device 11 above a non-target line 13c1 connected to the other energy storage device 11.

With this configuration, since the detection line holder 90 holds the connection terminal 19 of the connection target line 13b1 above the non-target line 13c1, the connection terminal 19 and the non-target line 13c1 can be disposed overlapping each other in a top view. As a result, the connection terminal 19 and the non-target line 13c1 are less likely to be disposed spreading in a plane, and space saving can be achieved.

In particular, in the present embodiment, since the plurality of first detection lines 13a1 and the positive power cable 31 are housed in the first cable path portion 715, space restriction is large as compared with the second cable path portion 725. However, as described above, when the connection terminal 19 and the non-target line 13c1 can be disposed overlapping each other as viewed in a top view, an installation space for the positive power cable 31 in the first cable path portion 715 can be ensured.

The detection line holder 90 holds the connection terminal 19 at a position overlapping the non-target line 13c1 in the plan view of the connection terminal 19.

With this configuration, since the connection terminal 19 is disposed at a position overlapping the non-target line 13c1 in a plan view, the connection terminal 19 and the non-target line 13c1 can be reliably disposed overlapping each other. Accordingly, space saving can be achieved more reliably.

The detection line holder 90 has a first wall 91 interposed between the connection terminal 19 of the connection target line 13b1 held and the non-target line 13c1.

With this configuration, since the first wall 91 of the detection line holder 90 is interposed between the connection terminal 19 held and the non-target line 13c1, the connection terminal 19 can be prevented from interfering with the non-target line 13c1. Thus, the connection terminal 19 can be prevented from damaging the non-target line 13c1, and the occurrence of a short circuit caused by the damage can be prevented. This eliminates the need to provide a dedicated member for preventing a short circuit, so that space saving can be further achieved.

The detection line holder 90 includes a spring 94 that restricts the connection terminal 19.

With this configuration, since the detection line holder 90 includes the spring 94 that restricts the connection terminal 19, the positional deviation of the connection terminal 19 can be prevented by the spring 94.

The detection line holder 90 has the first wall 91 for restricting the non-target line 13c1, which passes below the detection line holder 90, from above and a second wall 92 for restricting the non-target line 13c1 from one side.

With this configuration, since the first wall 91 of the detection line holder 90 restricts the upward movement of the non-target line 13c1 and the second wall 92 restricts the lateral movement of the non-target line 13c1, it is possible to prevent the non-target line 13c1 from moving and interfering with the connection terminal 19.

The connection terminal 19 is formed in a stepped shape such that the base 191 is formed above the tip 192 connected to the energy storage device 11, and the detection line holder 90 holds the base 191 of the connection terminal 19.

With this configuration, since the connection terminal 19 is formed in a stepped shape, and the base 191 located above the tip 192 connected to the energy storage device 11 is held by the detection line holder 90, the space of the non-target line 13c1 can be easily formed in the lower portion of the detection line holder 90.

### [7 Description of Modification]

Although the energy storage apparatus 1 according to the present embodiment has been described above, the present invention is not limited to the above embodiment. That is, the presently disclosed embodiment is exemplary in all respects and is not restrictive. The scope of the present invention is defined by the claims and includes meanings equivalent to the claims and all modifications within the claims.

In the above embodiment, the case where the guide 80 is the corner portion of the first surrounding wall 712 has been exemplified, but the guide may be a portion separate from the first surrounding wall 712. In this case, the shape of the guide can be determined without depending on the first surrounding wall 712. With the guide integrated with the locking piece 717, one end of the positive power cable 31 can be supported in a wider range.

In the above embodiment, the case where the angle α on the acute-angled side formed by outer side surface 81 of guide 80 and the Y-axis direction is less than 45 degrees has been exemplified, but the angle α may be greater than or equal to 45 degrees.

In the above embodiment, the case where the guide 80 supports the one end of the positive power cable 31 from the side has been exemplified, but the guide 80 may support the round terminal 311 of the positive power cable 31 from the side.

In the above embodiment, the case where the outer side surface 81 of the guide 80 has a planar shape has been exemplified, but the outer side surface of the guide may be a concave or convex curved surface. From the viewpoint of absorbing tension when the other end of the positive power cable 31 is pulled, the outer side surface of the guide is preferably a convex curved surface.

In the above embodiment, the case where the coupling 731 is disposed between each of all the pairs of adjacent energy storage devices 11 has been exemplified, but it is sufficient that the coupling be provided between at least a pair of energy storage devices.

In the above embodiment, the case where the exhaust member 60 is disposed immediately above the coupling 731 has been exemplified. The member disposed immediately above the coupling 731 may be a member except for the exhaust member 60. In this case as well, the upper end surface of a part of the coupling is disposed below or flush with the upper surface 11e of the case 11a of the energy storage device 11, so that it is possible to ensure a wider installation space for other members.

In the above embodiment, the case where the concave portion 732 is provided in the coupling 731 has been exemplified. The coupling may have a uniform shape over the entire length. In this case, the entire upper surface of the coupling may be disposed below or flush with the upper surface 11e of the case 11a of the energy storage device 11.

In the above embodiment, the connection terminal 19 has a stepped shape, but the connection terminal 19 may have a flat plate shape.

In the above embodiment, the case where the detection line holder 90 and the detection line locking portion 99 have different configurations has been exemplified, but the detection line locking portion 99 may have the same configuration as the detection line holder 90. In this case, the space efficiency in the second cable path portion 725 is increased, and hence, a member different from the second detection line 13a2 can be newly housed in the second cable path portion 725.

In the above embodiment, the case where the detection line 13a is connected to all the plurality of energy storage devices 11 has been exemplified. In the case of the detection line for temperature detection, the detection line may not be connected to all the plurality of energy storage devices. That is, it is sufficient that the detection line for temperature detection be electrically connected to each of at least two energy storage devices in order to detect the states of at least two energy storage devices among the plurality of energy storage devices. Specifically, a detection line for temperature detection may be connected only to the energy storage devices at both ends in the Y-axis direction and the energy storage device at the center. In this case as well, the detection line holder is disposed near one energy storage device of at least two energy storage devices and may hold the connection terminal of the detection line connected to the energy storage device above the other detection line connected to the other energy storage device. In this case as well, the connection terminals of the detection lines connected to the energy storage devices and the other detection lines are hardly disposed spreading in a plane, and space saving can be achieved.

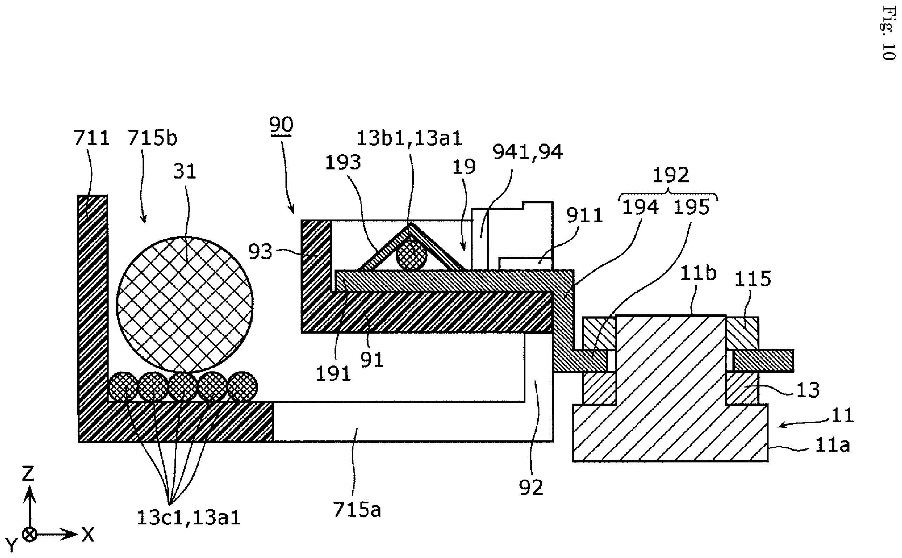

Fig. 10 is a cross-sectional view illustrating a schematic configuration of a detection line holder 715b according to Modification 1. Fig. 10 is a diagram corresponding to Fig. 9. As illustrated in Fig. 10, in the detection line holder 715b, the non-target line 13c1 is disposed below the positive power cable 31. In this manner, the non-target line 13c1 may be disposed below the positive power cable 31. Thereby, the positive power cable 31 can prevent the lifting of the non-target line 13c1. Fig. 10 illustrates the case where all the non-target lines 13c1 are disposed below the positive power cable 31, but it is sufficient that at least one non-target line 13c1 be disposed below the positive power cable 31. The remaining non-target lines 13c1 only need to be disposed below the detection line holder 90.

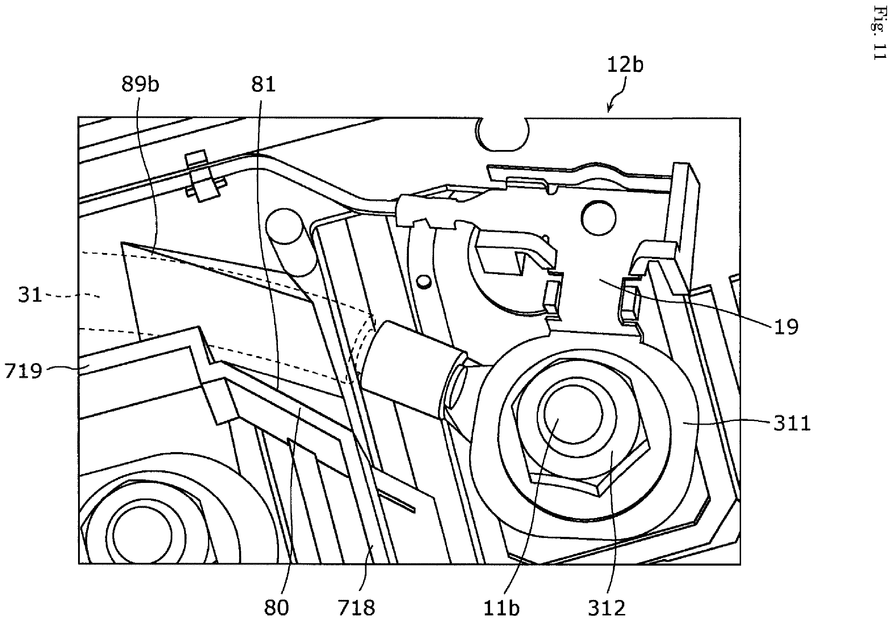

Fig. 11 is a perspective view a busbar frame 12b according to Modification 2, illustrating the vicinity of the guide 80. As illustrated in Fig. 11, the busbar frame 12b is provided with a slope 89b near the guide 80. Specifically, the slope 89b is disposed on the inner bottom surface of the first cable path portion 715 and near the guide 80. More specifically, the slope 89b is disposed adjacent to the outer side surface 81 of the guide 80. The slope 89b is a groove extending along the outer side surface 81. The positive power cable 31 is housed in the slope 89b. The bottom surface of the slope 89b is inclined so as to be lowered toward the positive electrode terminal 11b. That is, the bottom of the slope 89b becomes thinner toward the positive electrode terminal 11b. Since the bottom surface of the slope 89b is inclined as described above, an angular portion in the slope 89b is less likely to come into contact with the positive power cable 31. Thus, damage to the positive power cable 31 can be prevented. With the positive power cable 31 being housed in the slope 89b, the positional displacement of the positive power cable 31 can also be prevented. The one end of the positive power cable 31 is set at an inclined position with respect to the Y-axis direction when housed in the slope 89b. That is, it can be said that the slope 89b is an example of the guide according to the present disclosure.

The present invention can be realized not only as the energy storage apparatus 1 but also as the busbar frame 12 (busbar holder) that holds the plurality of busbars.

The scope of the present invention is set forth with the appended claims wherein such a scope may include forms constructed by arbitrarily combining the components included in the above embodiment and the modifications thereof.

### INDUSTRIAL APPLICABILITY

The present invention can be applied to an energy storage apparatus provided with an energy storage device such as a lithium ion secondary battery.

### DESCRIPTION OF REFERENCE SIGNS

1: energy storage apparatus
10: energy storage unit
11: energy storage device
11a: case (body portion)
11b: positive electrode terminal (electrode terminal)
11c: negative electrode terminal (electrode terminal)
11d: spacer
11e: upper surface
12, 12b: busbar frame (busbar holding member)
13: busbar
13a: detection line
13a1: first detection line
13a2: second detection line
13b: connector
13b1: connection target line
13c1: Non-target line (other detection line)
14: outer case body
15: outer case support
15a: bottom
15b, 15c, 17b, 17c: connection
16: substrate unit attachment portion
17: outer case lid
17a: top surface
18: outer case
19: connection terminal
20: substrate unit
30: cable
31: positive power cable (power cable)
32: negative power cable
50: exhaust portion
51: exhaust port
59: exhaust path
60: exhaust member
61: hole
62: convex portion
65: lid member
71: first holder
72: second holder
73: coupling
80: guide
81: outer side surface
89b: slope
90: detection line holder
91: first wall
92: second wall
93: third wall
94: spring
99: detection line locking portion
100: substrate housing portion
111: gas release valve
115, 312: nut
131: first busbar group
132: second busbar group
191: base
192: tip
193: fixing hook
194: hanging portion
195: attachment portion
200: substrate
311: round terminal
711: first outer wall
711a, 711b: first notch
712: first surrounding wall
713: first partition wall
714: first partition
715: first cable path portion (cable path portion, first detection line path)
715a: opening
715b: detection line holder
717: locking piece
718: first wall body
719: second wall body
721: second outer wall
721a: second notch
722: second surrounding wall
723: second partition wall
724: second partition
725: second cable path portion (second detection line path)
731: coupling
732: concave portion
733: bottom surface (upper end surface)
911: restricting protrusion
941: leaf spring
L2: broken line
L3: broken line
L5: two-dot chain line
α: angle

## Claims

1. An energy storage apparatus (1) comprising:
a plurality of energy storage devices (11) that include gas release valves (111), respectively, and are arranged in orientations in which the gas release valves (111) face an identical direction;
a plurality of busbars (13) electrically connected to the plurality of energy storage devices (11); and
a busbar holding member (12) that is disposed on the plurality of energy storage devices (11) and holds the plurality of busbars (13),
wherein the energy storage device (11) includes:
a body portion (11a) including each of the gas release valves (111) on an upper surface (11e) of the body portion (11a); and
a pair of electrode terminals (11b, 11c) disposed on the upper surface (11e) of the body portion (11a),
the busbar holding member (12) includes:
a first holder (71) disposed on the plurality of energy storage devices (11) and on one side of the gas release valve (111);
a second holder (72) disposed on the plurality of energy storage devices (11) and on the other side of the gas release valve (111); and
a coupling (731) that is disposed between a pair of adjacent energy storage devices (11) among the plurality of energy storage devices (11) and couples the first holder (71) with the second holder (72), and
an upper end surface (733) of a part of the coupling (731) is disposed below the upper surface (11e) of the body portion (11a) or flush with the upper surface (11e) of the body portion (11a).

2. The energy storage apparatus (1) according to claim 1, wherein the coupling (731) is disposed between each of a plurality of pairs of adjacent energy storage devices (11).

3. The energy storage apparatus (1) according to claim 1 or 2, further comprising an exhaust member (60) disposed on the coupling (731) of the busbar holding member (12) and forming an exhaust path (59) of gas released from the gas release valve (111).

4. The energy storage apparatus (1) according to claim 3, wherein
the coupling (731) includes a concave portion (732) forming the upper end surface (733) of the part of the coupling (731), and
the exhaust member (60) is disposed in the concave portion (732).

5. The energy storage apparatus (1) according to any one of claims 1 to 4, further comprising a plurality of detection lines (13a) for detecting a state of each of the plurality of energy storage devices (11),
wherein
the plurality of detection lines (13a) include a first detection line (13a1) and a second detection line (13a2),
the first holder (71) includes a first detection line path that is a path of at least one first detection line (13a1) of the plurality of detection lines (13a),
the second holder (72) includes a second detection line path that is a path of the second detection line (13a2) except for the at least one first detection line (13a1) of the plurality of detection lines (13a), and
the first detection line (13a1) and the second detection line (13a2) avoid a space between the first holder (71) and the second holder (72).

## Patentansprüche

1. Energiespeicheranordnung (1), umfassend:
eine Mehrzahl von Energiespeichereinrichtungen (11), die jeweils Gasablassventile (111) umfassen und in Ausrichtungen angeordnet sind, in denen die Gasablassventile (111) in dieselbe Richtung weisen;
eine Mehrzahl von Sammelschienen (13), die elektrisch mit der Mehrzahl von Energiespeichereinrichtungen (11) verbunden sind; und
ein Sammelschienenhalteelement (12), das auf der Mehrzahl von Energiespeichereinrichtungen (11) angeordnet ist und die Mehrzahl von Sammelschienen (13) hält,
wobei die Energiespeichereinrichtung (11) umfasst:
einen Körperabschnitt (11a), der jedes der Gasablassventile (111) auf einer oberen Oberfläche (11e) des Körperabschnitts (11a) umfasst; und
ein Paar von Elektrodenanschlüssen (11b, 11c), die auf der oberen Oberfläche (11e) des Körperabschnitts (11a) angeordnet sind,
wobei das Sammelschienenhalteelement (12) umfasst:
einen ersten Halter (71), der auf der Mehrzahl von Energiespeichereinrichtungen (11) und auf einer Seite des Gasablassventils (111) angeordnet ist;
einen zweiten Halter (72), der auf der Mehrzahl von Energiespeichereinrichtungen (11) und auf der anderen Seite des Gasablassventils (111) angeordnet ist; und
einen Verbindungsabschnitt (731), der zwischen einem Paar benachbarter Energiespeichereinrichtungen (11) aus der Mehrzahl von Energiespeichereinrichtungen (11) angeordnet ist und den ersten Halter (71) mit dem zweiten Halter (72) verbindet, und
wobei eine obere Endfläche (733) eines Teils des Verbindungsabschnitts (731) unterhalb der oberen Oberfläche (11e) des Körperabschnitts (11a) oder bündig mit der oberen Oberfläche (11e) des Körperabschnitts (11a) angeordnet ist.

2. Energiespeicheranordnung (1) nach Anspruch 1, wobei der Verbindungsabschnitt (731) zwischen jedem einer Mehrzahl von Paaren benachbarter Energiespeichereinrichtungen (11) angeordnet ist.

3. Energiespeicheranordnung (1) nach Anspruch 1 oder 2, ferner umfassend ein Gasabführelement (60), das auf dem Verbindungsabschnitt (731) des Sammelschienenhalteelements (12) angeordnet ist und einen Gasabführweg (59) für aus dem Gasablassventil (111) freigesetztes Gas bildet.

4. Energiespeicheranordnung (1) nach Anspruch 3, wobei
der Verbindungsabschnitt (731) einen konkaven Abschnitt (732) umfasst, der die obere Endfläche (733) des Teils des Verbindungsabschnitts (731) bildet, und
das Gasabführelement (60) in dem konkaven Abschnitt (732) angeordnet ist.

5. Energiespeicheranordnung (1) nach einem der Ansprüche 1 bis 4, ferner umfassend eine Mehrzahl von Erfassungsleitungen (13a) zum Erfassen eines Zustands jeder der Mehrzahl von Energiespeichereinrichtungen (11),
wobei
die Mehrzahl von Erfassungsleitungen (13a) eine erste Erfassungsleitung (13a1) und eine zweite Erfassungsleitung (13a2) umfasst,
der erste Halter (71) einen ersten Erfassungsleitungsweg umfasst, der ein Weg mindestens einer ersten Erfassungsleitung (13a1) der Mehrzahl von Erfassungsleitungen (13a) ist,
der zweite Halter (72) einen zweiten Erfassungsleitungsweg umfasst, der ein Weg einer zweiten Erfassungsleitung (13a2) mit Ausnahme der mindestens einen ersten Erfassungsleitung (13a1) der Mehrzahl von Erfassungsleitungen (13a) ist, und
die erste Erfassungsleitung (13a1) und die zweite Erfassungsleitung (13a2) einen Zwischenraum zwischen dem ersten Halter (71) und dem zweiten Halter (72) vermeiden.

## Revendications

1. Appareil de stockage d'énergie (1) comprenant :
une pluralité de dispositifs de stockage d'énergie (11) qui comprennent respectivement des soupapes d'évacuation de gaz (111) et sont agencés selon des orientations dans lesquelles les soupapes d'évacuation de gaz (111) sont orientées dans une même direction ;
une pluralité de barres omnibus (13) connectées électriquement à la pluralité de dispositifs de stockage d'énergie (11) ; et
un élément de maintien de barres omnibus (12) qui est disposé sur la pluralité de dispositifs de stockage d'énergie (11) et maintient la pluralité de barres omnibus (13),
dans lequel le dispositif de stockage d'énergie (11) comprend :
une partie de corps (11a) comprenant chacune des soupapes d'évacuation de gaz (111) sur une surface supérieure (11e) de la partie de corps (11a) ; et
une paire de bornes d'électrode (11b, 11c) disposées sur la surface supérieure (11e) de la partie de corps (11a),
l'élément de maintien de barres omnibus (12) comprenant :
un premier support (71) disposé sur la pluralité de dispositifs de stockage d'énergie (11) et d'un côté de la soupape d'évacuation de gaz (111) ;
un second support (72) disposé sur la pluralité de dispositifs de stockage d'énergie (11) et de l'autre côté de la soupape d'évacuation de gaz (111) ; et
une partie de liaison (731) qui est disposée entre une paire de dispositifs de stockage d'énergie (11) adjacents parmi la pluralité de dispositifs de stockage d'énergie (11) et relie le premier support (71) au second support (72), et
une surface d'extrémité supérieure (733) d'une partie de la partie de liaison (731) étant disposée au-dessous de la surface supérieure (11e) de la partie de corps (11a) ou affleurant à la surface supérieure (11e) de la partie de corps (11a).

2. Appareil de stockage d'énergie (1) selon la revendication 1, dans lequel la partie de liaison (731) est disposée entre chacune d'une pluralité de paires de dispositifs de stockage d'énergie (11) adjacents.

3. Appareil de stockage d'énergie (1) selon la revendication 1 ou 2, comprenant en outre un élément d'évacuation de gaz (60) disposé sur la partie de liaison (731) de l'élément de maintien de barres omnibus (12) et formant une voie d'évacuation de gaz (59) pour le gaz libéré par la soupape d'évacuation de gaz (111).

4. Appareil de stockage d'énergie (1) selon la revendication 3, dans lequel
la partie de liaison (731) comprend une partie concave (732) formant la surface d'extrémité supérieure (733) de la partie de la partie de liaison (731), et
l'élément d'évacuation de gaz (60) est disposé dans la partie concave (732).

5. Appareil de stockage d'énergie (1) selon l'une quelconque des revendications 1 à 4, comprenant en outre une pluralité de lignes de détection (13a) destinées à détecter un état de chacun de la pluralité de dispositifs de stockage d'énergie (11),
dans lequel
la pluralité de lignes de détection (13a) comprend une première ligne de détection (13a1) et une seconde ligne de détection (13a2),
le premier support (71) comprend un premier trajet de ligne de détection qui est un trajet d'au moins une première ligne de détection (13a1) de la pluralité de lignes de détection (13a),
le second support (72) comprend un second trajet de ligne de détection qui est un trajet d'une seconde ligne de détection (13a2), à l'exception de ladite au moins une première ligne de détection (13a1) de la pluralité de lignes de détection (13a), et
la première ligne de détection (13a1) et la seconde ligne de détection (13a2) évitent un espace entre le premier support (71) et le second support (72).
